Europäisches Patentamt

European Patent Office

Office européen des brevets

(11) Veröffentlichungsnummer : **0 085 368**
**B1**

# (12) EUROPÄISCHE PATENTSCHRIFT

(45) Veröffentlichungstag der Patentschrift :
16.04.86

(51) Int. Cl.⁴ : **B 65 G 65/46**

(21) Anmeldenummer : **83100548.3**

(22) Anmeldetag : **22.01.83**

(54) **Behälter.**

(30) Priorität : **30.01.82 DE 3203161**

(43) Veröffentlichungstag der Anmeldung :
**10.08.83 Patentblatt 83/32**

(45) Bekanntmachung des Hinweises auf die Patenterteilung : **16.04.86 Patentblatt 86/16**

(84) Benannte Vertragsstaaten :
**AT CH FR IT LI**

(56) Entgegenhaltungen :
**DE-B- 1 150 024**
**FR-A- 2 469 451**
**GB-A- 1 265 421**
**US-A- 2 943 752**

(73) Patentinhaber : **Rieger, Herbert**
**Talstrasse 33**
**D-7121 Ingersheim (DE)**

(72) Erfinder : **Rieger, Herbert**
**Talstrasse 33**
**D-7121 Ingersheim (DE)**

(74) Vertreter : **Patentanwälte Kohler - Schwindling -**
**Späth**
**Hohentwielstrasse 41**
**D-7000 Stuttgart 1 (DE)**

EP 0 085 368 B1

**Beschreibung**

Die Erfindung bezieht sich auf einen stehenden Weinmaische-Gärtank mit einem ersten kreiszylindrischen Abschnitt und einem sich verjüngenden Boden, der durch einen zweiten kreiszylindrischen Abschnitt gebildet wird, welcher von zwei einander gegenüberliegenden schrägen, ebenen Wandflächen geschnitten wird, zwischen deren unteren Enden eine Austragschnecke angeordnet ist.

Ein derartiger Gärtank ist aus der FR-A-2 469 451 bekannt.

Derartige Behälter bestehen üblicherweise aus Edelstahl oder Kunststoff und werden in der Kellereitechnik verwendet.

Vor der Gärung und insbesondere beim Ablassen des Saftes setzen sich in dem trichterförmigen Boden die Trester ab. Um die Trester nach dem Abfließen des Saftes aus dem Behälter entfernen zu können, weisen bekannte Behälter am unteren Ende des trichterförmigen Bodens eine Austragschnecke auf. Zwar werden mit dieser Schnecke alle Trester ausgetragen, die in den Bereich der Schnecke gelangen ; in vielen Fällen, insbesondere dann, wenn die Trester nicht sofort nach dem Ablassen des Saftes ausgetragen werden, backen jedoch die Trester so stark zusammen, daß sich über der Schnecke eine Brücke aus Trester bildet, die ein weiteres Nachrutschen von Trester in den Bereich der Schnecke verhindert. Bei bekannten Behältern dieser Art ist es daher oft erforderlich, von der Decke des Behälters aus mit einer langen Stange durch die Einfüllöffnung hindurch die aus Trester gebildete Brücke über der Austragschnecke zu zerstören und die Trester in den Bereich der Schnecke hinabzustoßen.

Ein weiterer Gesichtspunkt ist, daß Rotweinmaische-Gärtanks in aller Regel auch ein Rührwerk, bei stehenden kreiszylindrischen Tanks im allgemeinen ein zentrisch angeordnetes Rührwerk mit senkrechter Rührwerkswelle, aufweisen. Dieses Rührwerk dient dazu, um während des Gärens der Rotweinmaische den roten Farbstoff aus den Traubenschalen herauszuwaschen. Dabei ist es erforderlich, möglichst den gesamten Tankraum bis kurz oberhalb der Austragschnecke mit den Flügeln des Rührwerkes zu überstreichen, damit die gesamte Maische durchgerührt wird.

Zwar ist aus der eingangs genannten FR-A-2 469 451 bereits ein Rotweinmaische-Gärtank bekannt, der die Form eines stehenden Zylinders aufweist und dessen Bodenbereich eine Rinne aufweist, die durch zwei den Zylinder schneidende ebene Schrägflächen gebildet wird, durch diese im Bodenbereich entstehende sehr lange und verhältnismäßig schmale Rinne können dort jedoch nur Rührwerke eingesetzt werden, deren Rührflügel so lang sind wie es der halben Rinnenbreite entspricht. An den Enden der Rinne entstehen damit verhältnismäßig große Bereiche, in welche die unteren Rührflügel nicht hineingelangen können. Dies ist in zweierlei Hinsicht von Nachteil. Zum einen wird bei dem bekannten Gärtank nicht der gesamte Tankinhalt durchgerührt, weil — wie erwähnt — im Bodenbereich große Raumbereiche außerhalb der Bewegungsbahnen des Rührwerkes liegen. Zum anderen können in dem bekannten Tank keine geringen Weinmengen verarbeitet werden, mit denen der Tank nur zum Teil befüllt wird. Bei derartigen geringen Weinmengen handelt es sich aber im allgemeinen gerade um besonders hochwertige Weine, bei denen eine möglichst schonende Maischebehandlung angezeigt ist. Füllt die sehr hochwertige Maische jedoch nur den Bodenbereich des Tanks im Bereich der Rinne aus, wird nur ein sehr geringer Teil der Maische vom Rührwerk durchgerührt und muß daher, um auch weiter außen liegende Maischebestandteile zu erfassen, mit besonders hoher Geschwindigkeit laufen, um genügend Bewegung in der Maische zu erzielen. Diese schnelle Rührwerksbewegung führt jedoch zwangsläufig zu einer drastischen Verminderung der Weinqualität.

Der Erfindung liegt daher die Aufgabe zugrunde, einen Weinmaische-Gärtank der eingangs genannten Art dahingehend weiterzubilden, daß ein Boden entsteht, in dem Trester nicht zur Brückenbildung über der Austragschnecke neigen und der eine Form hat, daß im Falle der Rotweinherstellung ein im Tank angeordnetes Rührwerk auch den Bodenbereich praktisch vollkommen erfassen kann.

Diese Aufgabe wird erfindungsgemäß dadurch gelöst, daß sich am unteren Ende des ersten kreiszylindrischen Abschnittes ein kegelstumpfförmiger Abschnitt anschließt, daß der zweite kreiszylindrische Abschnitt einen gegenüber dem ersten kreiszylindrischen Abschnitt verminderten Durchmesser aufweist und sich am unteren Ende des kegelstumpfförmigen Abschnittes anschließt.

Der erfindungsgemäße Gärtank hat damit einmal den wesentlichen Vorteil, daß eine vollständige Durchmischung der Maische in praktisch allen Bereichen des Tanks bis kurz oberhalb der Austragschnecke gewährleistet ist und daß somit der Tank in den unterschiedlichsten Befüllungszuständen eingesetzt werden kann. Dies ist von besonderem Vorteil für Kellereibetriebe, in denen Rotweinmaische-Gärtanks seitlich nacheinander für unterschiedliche Rebsorten eingesetzt werden, wobei in der Regel zunächst Weine mittlerer Qualität in großer Menge verarbeitet werden müssen und daher große Tanks erforderlich sind, später jedoch hoch- und höchstwertige Rebsorten in entsprechend geringerer bis hin zu geringster Menge angeliefert werden. Mit dem erfindungsgemäßen Gärtank kann all diesen Anforderungen entsprochen werden, weil durch die sehr effektiven Rühreigenschaften auch am Behälterboden selbst geringste Maischemengen gleichmäßig und damit schonend bearbeitet werden können, wie dies für hochwertige Weine unabdingbar ist.

Weiterhin haben Versuche ergeben, daß durch die vorstehend genannte mehrstufige Form des trichterförmigen Bodens sich der Behälter auch von selbst vollständig entleert und die Brückenbildung der Trester über der Schnecke weitgehend verhindert wird. Dies mag daher rühren, daß der Weg der im Bereich der Behälterwand liegenden Trester zur Austragschnecke nicht nur verschieden lang ist, sondern auch entlang von unterschiedlich steilen Wandabschnitten verläuft, die Trester bei ihrem Absacken also sehr unterschiedliche Bedingungen vorfinden und sich daher mit verschiedener Geschwindigkeit bewegen, wodurch keine günstigen Voraussetzungen für das Zusammenbacken eines Tresterkuchens über der Schnecke gegeben sind.

Da der trichterförmige Boden an seinem oberen Ende die gleiche Kreisform aufweist wie der kreiszylindermantelförmige Mittelteil des Behälters, so entstehen an dieser Stelle keine teuren Konstruktionen wie bei dem bekannten Behälter. Außerdem läßt sich auch der untere Teil sehr einfach durch Ausschneiden eines kreiszylindermantelförmigen Teiles und Einsetzen einer entsprechend ausgeschnittenen ebenen Blechbahn herstellen.

Die Höhe, von der ab der kreiszylindermantelförmige Abschnitt des Bodens durch die schrägen Wände angeschnitten ist, kann verschieden sein. Bei Ausführungsformen der Erfindung beginnt das Anschneiden des kreiszylindermantelförmigen Bodenabschnittes knapp unterhalb von seinem oberen Rand, so daß nur ein verhältnismäßig niedriger Stutzen stehenbleibt, der auf seinem ganzen Umfang kreiszylindrisch ist.

Bei Ausführungsformen der Erfindung verlaufen die schrägen Wände in einem Winkel von höchstens 55° gegen die senkrechte Längsmittelebene des Behälters, vorzugsweise ist dieser Winkel nicht größer als 45°, so daß die Trester an diesen Wandflächen ein genügendes Gefälle vorfinden.

Bei Ausführungsformen der Erfindung weisen die beiden schrägen Wände die gleiche Neigung gegen die Längsmittelebene des Behälters auf, so daß die Austragschnecke in die Längsmittelebene des Behälters zu liegen kommt. Bei anderen Ausführungsformen der Erfindung, insbesondere solchen bei denen der Behälter in seiner Symmetrieachse eine Rührwerkswelle aufweist, verläuft die Austragschnecke nicht in der Längsmittelebene des Behälters, sondern ist gegenüber dieser Längsmittelebene seitlich versetzt, so daß das untere Ende der Welle neben der Schnecke angeordnet ist. Dies kann dadurch verwirklicht sein, daß die schrägen Wände die gleiche Neigung gegen die Längsmittelebene haben, jedoch der kreiszylindermantelförmige Abschnitt durch die eine Schrägfläche höher angeschnitten ist als die gegenüberliegende Schrägfläche. Bei anderen Ausführungsformen der Erfindung kann dies dadurch verwirklicht sein, daß die beiden schrägen Wände eine unterschiedliche Neigung gegenüber der Längsmittelebene aufweisen.

Schließlich können die schrägen Wände sowohl unterschiedliche Neigung aufweisen als auch an dem kreiszylindrischen Bodenabschnitt unterschiedlich hoch angeschnitten sein.

Diese Ausführungsformen der Erfindung haben den Vorteil, daß das untere Ende der zentrischen Rührwerkswelle nicht unmittelbar über einer ebenfalls in der Längsmittelebene angeordneten Austragschnecke abgestützt werden muß. Diese Stützkonstruktion würde nämlich das Absinken der Trester in den Bereich der Schnecke stören. Bei den Ausführungsformen mit gegenüber der Längsmittelebene versetzter Schnecke kann dagegen das untere Ende der Rührwerkswelle neben der Schnecke in der Behälterwand gelagert sein, wobei vorteilhaft diese Stelle der Behälterwand außen zusätzlich unterstützt oder versteift ist.

Bei einer Ausführungsform der Erfindung ist jedoch das untere Ende der Rührwerkswelle durch die Schrägfläche hindurchgeführt und abgedichtet, wobei das untere Ende der aus dem Behälterboden herausgeführten Rührwerkswelle geeignet gelagert und durch mit dem Ständer des Behälters verbundenen Trägern abgestützt ist.

In der Zeichnung sind Ausführungsformen der Erfindung dargestellt. Es zeigen

Figur 1 eine Vorderansicht einer Ausführungsform eines erfindungsgemäßen Behälters ;

Figur 2 eine dazugehörige Seitenansicht und

Figur 3 eine der Fig. 1 entsprechende Ansicht einer Ausführungsform mit seitlich der Längsmittelebene angeordneter Austragschnecke.

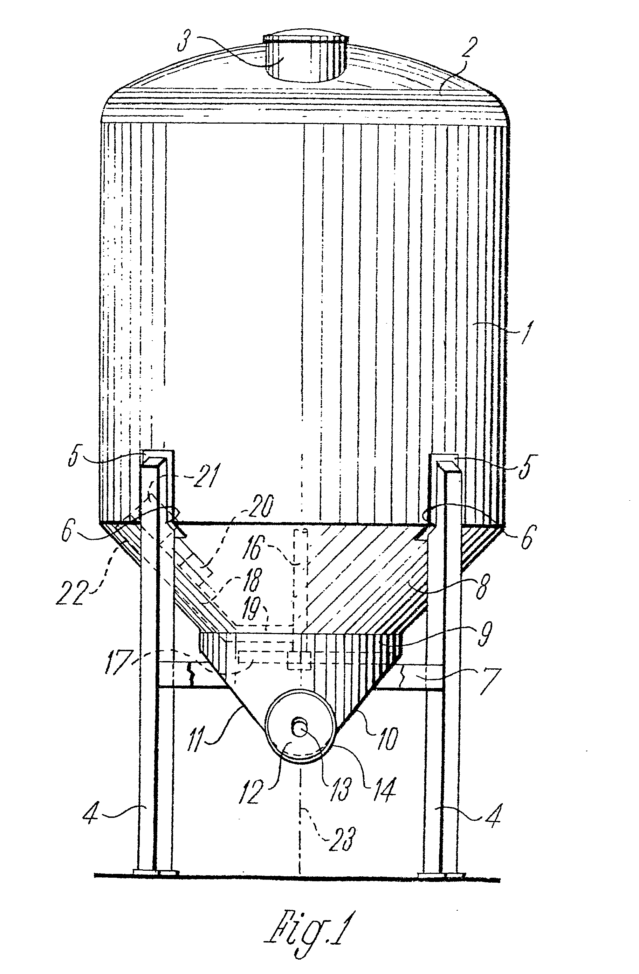

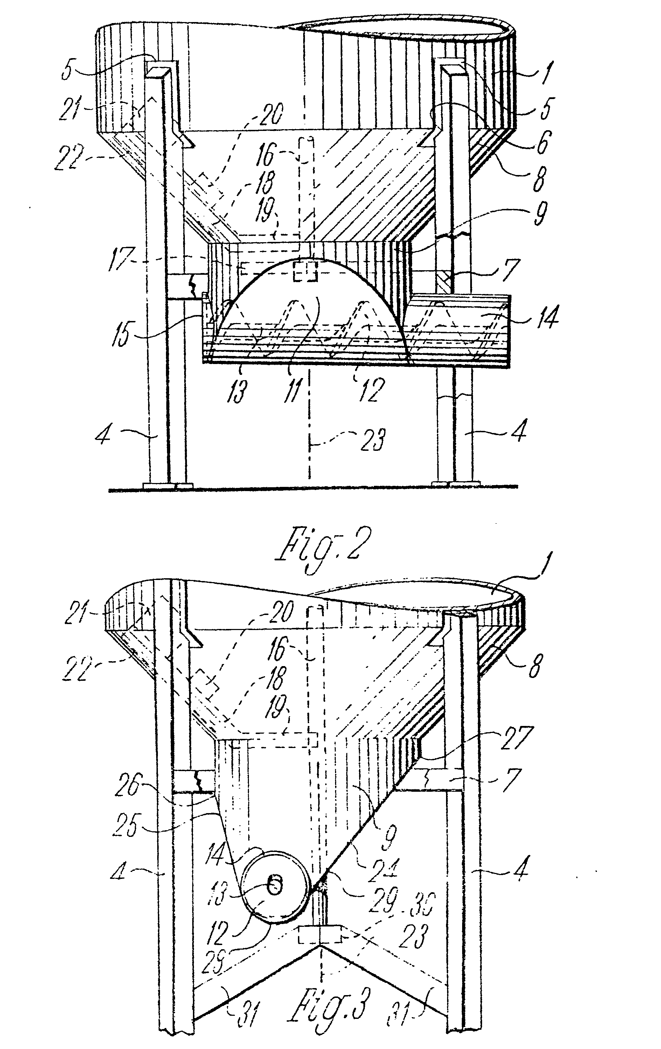

Bei der in den Figuren 1 und 2 dargestellten Ausführungsform der Erfindung ist der Haupt- und Mittelteil 1 kreiszylindermantelförmig ausgebildet. Er ist oben mit einem Deckel 2 verschlossen, der eine Einfüllöffnung 3 aufweist. Vier Stützen 4 stützen den unteren Abschnitt des Teiles 1 ab, die an ihrem oberen Ende Auflagebleche 5 tragen und am unteren Ende des kreiszylindermantelförmigen Teils 1 je eine Schulter 6 aufweisen, auf denen sich der untere Rand des Teils 1 abstützt. Die Stützen 4 sind durch Streben 7 miteinander verbunden.

An das untere Ende des kreiszylinderischen Mittelteiles 1 schließt sich ein kegelstumpfförmiger Bodenteil 8 an, an dessen unterem Ende ein kreiszylindrischer Abschnitt 9 befestigt ist, der von zwei einander gegenüberliegenden schrägen ebenen Wände 10 und 11 geschnitten ist. Die unteren Enden der schrägen Wandflächen 10 und 11 sind durch eine ein Kreiszylindersegment bildende Fläche 13 miteinander verbunden. Im Bereich dieses segmentförmigen Bodenabschnittes 13 und zwischen den unteren Enden der schrägen Wände 10 und 11 ist eine Austragschnecke 12 angeordnet, deren Antrieb nicht gezeichnet ist und deren Längsachse etwas schräg gegen die Waagrechte geneigt ist. An dem kreiszylindermantelförmigen Abschnitt 9 ist im Bereich der Schnecke 12 an der Vorderseite des Behälters ein Stutzen 14 befestigt, an der Hinterseite eine verhältnismäßig kurze Kappe 15 mit ebener Stirnfläche, in der das hintere Ende der Schneckenwelle gelagert ist. Der vordere Verschluß des Stutzens 14 und andere zum Verständnis der Erfindung nicht unbedingt notwendige Teile sind in der Zeichnung nicht dargestellt.

Zentrisch im Behälter ist eine senkrechte Rührwerkswelle 16 angeordnet, deren unteres Ende im kreiszylinderförmigen Bodenabschnitt 9 auf sternförmig verlaufenden Trägern 17 gelagert und abgestützt ist. Diese Rührwerkswelle 16 trägt über ihre Länge verteilt angeordnete Rührflügel. Der unterste Rührflügel 18 ist über einen waagrecht verlaufenden Arm 19 an der Rührwerkswelle 16 befestigt, er verläuft parallel zu den Mantellinien des kegelstumpfförmigen Bodenteiles 8 und trägt Rührflügel 20 und 21 und einen aus elastischem Werkstoff bestehenden Abstreifer 22, der entlang der Innenfläche des kegelstumpfförmigen Bodenteiles 8 gleitet und an der Innenfläche der Wand dieses Teiles entlang gleitet.

Bei der in Fig. 1 und Fig. 2 dargestellten Ausführungsform weisen die beiden schrägen Wände 10 und 11 die gleiche Neigung gegen die Längsmittelebene 23 auf und der kreiszylinderförmige Abschnitt 9 ist von diesen ebenen Wänden 10 und 11 in der gleichen Höhe angeschnitten.

Die in Fig. 3 dargestellte Ausführungsform der Erfindung unterscheidet sich von der in den Figuren 1 und 2 dargestelllen Ausführungsform dadurch, daß die Austragschnecke 12 einschließlich des Stutzens 14 und der Kappe 15 seitwärts von der Längsmittelebene 23 angeordnet ist. Die schrägen Wandflächen 24 und 25 weisen einen unterschiedlichen Winkel zu der Längsmittelebene 23 auf. Die ebene Wandfläche 24 weist etwa einen Winkel von 45° gegenüber der Längsmittelebene 23 auf, sie schneidet den kreiszylinderförmigen Bodenabschnitt 9 verhältnismäßig weit oben an. Die ebene schräge Wand 25 verläuft in einem wesentlich kleineren Winkel zu der Längsmittelebene 23, der in der dargestellten Ausführungsform 15° betragen mag, seine oberste Schnittkante 26 mit dem kreiszylindermantelförmigen Bodenabschnitt 9 verläuft wesentlich weiter unten als die oberste Schnittkante 27 des Abschnittes 9 mit der schrägen ebenen Wandfläche 24.

Auch bei dieser Ausführungsform der Erfindung sind die unteren Enden der schrägen Wände 24 und 25 durch einen in Form eines Kreiszylindersegmentes gebogenen Blechabschnitt miteinander verbunden und die Austragschnecke 12 ist in diesem Abschnitt 28 und zwischen den unteren Enden der Wände 24 und 25 angeordnet. Da die Schnecke 12 seitwärts von der Längsmittelebene 23 angeordnet ist, kann die zentrisch im Behälter und damit in der Längsmittelebene 23 angeordnete Rührwerkswelle 16 gegenüber der Ausführungsform nach Fig. 1 und Fig. 2 nach unten verlängert werden, so daß sie neben der Schnecke 12 verläuft und durch eine abgedichtete Öffnung 29 in der schrägen Wand 24 hindurch nach außen tritt und dort sich in einem Lager 30 abstützt, das wiederum durch vom Lager 30 schräg nach unten verlaufende, an den Trägern 4 befestigte Streben 31 nach unten abgestützt ist.

## Patentansprüche

1. Stehender Weinmaische-Gärtank mit einem ersten kreiszylindrischen Abschnitt (1) und einem sich verjüngenden Boden, der durch einen zweiten kreiszylindrischen Abschnitt (9) gebildet wird, welcher von zwei einander gegenüberliegenden schrägen, ebenen Wandflächen (10, 11 ; 24, 25) geschnitten wird, zwischen deren unteren Enden eine Austragschnecke (12) angeordnet ist, dadurch gekennzeichnet, daß sich am unteren Ende des ersten kreiszylindrischen Abschnittes (1) ein kegelstumpfförmiger Abschnitt (8) anschließt, daß der zweite kreiszylindrische Abschnitt (9) einen gegenüber dem ersten kreiszylindrischen Abschnitt (1) verminderten Durchmesser aufweist und sich am unteren Ende des kegelstumpfförmigen Abschnittes (8) anschließt.

2. Gärtank nach Anspruch 1, dadurch gekennzeichnet, daß die beiden schrägen Wände (10, 11 ; 24, 25) in einem Winkel von höchstens 55° zu der senkrechten Längsmittelebene (23) angeordnet sind.

3. Gärtank nach Anspruch 1, dadurch gekennzeichnet, daß die schrägen Wände (10, 11 ; 24, 25) in einem Winkel von höchstens 45° zu der Längsmittelebene (23) angeordnet sind.

4. Gärtank nach einem der Ansprüche 1 bis 3, insbesondere mit einer senkrechten zentrisch angeordneten Rührwerkswelle (16), dadurch gekennzeichnet, daß die Austragschnecke (12) seitlich der Längsmittelebene (23) angeordnet ist.

5. Gärtank nach Anspruch 4, dadurch gekennzeichnet, daß das untere Ende einer zentrisch im Behälter (1) angeordneten Rührwerkswelle (16) neben der Austragschnecke (12) angeordnet ist.

6. Gärtank nach Anspruch 4, dadurch gekennzeichnet, daß das untere Ende der zentrisch im Behälter (1) angeordneten Rührwerkswelle (16) durch eine schräge Wand (24) hindurchgeführt und außerhalb des Behälterbodens abgeschützt ist.

7. Gärtank nach einem der vorhergehenden Ansprüche, dadurch gekennzeichnet, daß die schrägen Wände (10, 11) die gleiche Neigung gegen die Längsmittelebene (23) des Behälters aufweisen.

8. Gärtank nach einem der Ansprüche 1 bis 6, dadurch gekennzeichnet, daß die schrägen Wände (24, 25) eine unterschiedliche Neigung gegenüber der Längsmittelebene (23) aufweisen.

9. Gärtank nach Anspruch 7 oder 8, dadurch gekennzeichnet, daß die beiden schrägen Flächen (24, 25) in unterschiedlicher Höhe den kreiszylindrischen Abschnitt (9) anschneiden.

## Claims

1. An upright wine fermentation tank having a first circular cylindrical portion (1) and a tapered bottom, said bottom being formed by a second circular cylindrical portion (9) which is intersected by two sloping plane wall surfaces, being located opposite one another and between the lower ends of which is located a discharge screw (12), characterized in that a truncated cone-shaped portion (8) abuts on the lower end of said first circular cylindrical portion (1), that said second circular cylindrical portion (9) has a smaller diameter as compared with said first circular cylindrical portion (1) and abuts on the lower end of said truncated cone-shaped portion (8).

2. A tank according to Claim 1, characterized in that said two sloping walls are arranged at an angle of maximum 55° to said vertical center plane (23).

3. A tank according to Claim 1, characterized in that said sloping walls (10, 11 ; 24, 25) are arranged at an angle of maximum 45° to said center plane (23).

4. A tank according to any of Claims 1 to 3, especially including a centrally arranged vertical agitator shaft (16), characterized in that said discharge screw (12) is located to the side of said center plane (23).

5. A tank according to Claim 4, characterized in that the lower end of an agitator shaft (16), being arranged in the center of said tank (1), is located by the side of said discharge screw (12).

6. A vessel according to Claim 4, characterized in that the lower end of said agitator shaft (16), being arranged in the center of said tank (1) passes through a sloping wall (24) and is supported outside the tank bottom.

7. A tank according to any of the preceding claims, characterized in that said sloping walls (10, 11) have the same inclination to said center plane (23).

8. A tank according to any of Claims 1 to 6, characterized in that said sloping walls (24, 25) have different inclinations relative to said center plane (23).

9. A tank according to Claim 7 or 8, characterized in that said two sloping surfaces (24, 25) intersect said circular cylindrical portion (9) at different heights.

**Revendications**

1. Citerne verticale de fermentation des moûts comprenant une première partie cylindrique circulaire (1) et un fond allant en se rétrécissant, formé par une seconde partie cylindrique circulaire (2) coupée par deux parois planes (10, 11 ; 24, 25), obliques l'une par rapport à l'autre, entre les extrémités inférieures desquelles est disposée une vis sans fin de distribution (12), caractérisé en ce que :

à l'extrémité inférieure de la première partie cylindrique circulaire (1) se rattache une partie (8) en tronc de cône ;

et la seconde partie cylindrique circulaire (9) présente un diamètre réduit par rapport à la première partie cylindrique circulaire (1) et se rattache à l'extrémité inférieure de la partie (8) en tronc de cône.

2. Citerne de fermentation selon la revendication 1, caractérisé en ce que les deux parois obliques (10, 11 ; 24, 25) font un angle d'au plus 55° par rapport au plan médian vertical longitudinal (23).

3. Citerne de fermentation selon la revendication 1, caractérisée en ce que les parois obliques (10, 11 ; 24, 25) font un angle d'au plus 45° par rapport au plan médian longitudinal (23).

4. Citerne de fermentation selon l'une des revendications 1 à 3, en particulier avec un axe vertical de mélangeur centré (16), caractérisée en ce que la vis sans fin de distribution (12) est montée latéralement au plan médian horizontal (23).

5. Citerne de fermentation selon la revendication 4, caractérisée en ce que l'extrémité inférieure d'un axe de mélangeur, monté de manière centrée dans le récipient (1), est disposée à côté de la vis sans fin de distribution (12).

6. Citerne de fermentation selon la revendication 4, caractérisée en ce que l'extrémité inférieure de l'axe de mélangeur monté de manière centrée dans le récipient (1) traverse une paroi oblique (24) et est étayée à l'extérieur du fond du récipient.

7. Citerne de fermentation selon l'une des revendications précédentes, caractérisée en ce que les parois obliques (10, 11) ont la même inclinaison par rapport au plan médian longitudinal (23) du récipient.

8. Citerne de fermentation selon l'une des revendications 1 à 6, caractérisée en ce que les parois obliques (24, 25) ont une inclinaison différente par rapport au plan médian longitudinal (23) du récipient.

9. Citerne de fermentation selon l'une des revendications 7 et 8, caractérisée en ce que les deux surfaces obliques (24, 25) coupent la partie cylindrique circulaire (9) à une hauteur différente.

*Fig.1*

1

0 085 368

Fig. 2

Fig. 3

2